# EUROPEAN PATENT SPECIFICATION

(11) **EP 3 118 722 B1**
(45) Date of publication and mention of the grant of the patent: **01.07.2020**
(21) Application number: 15176650.8
(22) Date of filing: 14.07.2015
(51) Int. Cl.: G06F 3/01, G06F 3/0485, G06F 3/0484

(54) **MEDIATED REALITY**
VERMITTELTE REALITÄT
RÉALITÉ INDUITE

(43) Date of publication of application: 18.01.2017
(73) Proprietor: Nokia Technologies Oy, 02610 Espoo (FI)
(72) Inventor: Leppänen, Jussi Artturi, 33580 Tampere (FI); Eronen, Antti Johannes, 33820 Tampere (FI); Lehtiniemi, Arto Juhani, 33880 Lempäälä (FI)
(74) Representative: Swindell & Pearson Limited

(56) References cited:
- US-A1- 2012 157 203
- US-A1- 2012 272 179
- US-A1- 2014 258 942
- Dana Slambekova: "Gaze ?and ?Gesture ?Based ?Object? Interaction ?in? Virtual ?World", , 31 May 2012 (2012-05-31), XP055237010, Retrieved from the Internet: URL:https://www.cs.rit.edu/~dxs4659/Report .pdf [retrieved on 2015-12-17]
- DANA SLAMBEKOVA ET AL: "Gaze and gesture based object manipulation in virtual worlds", VIRTUAL REALITY SOFTWARE AND TECHNOLOGY, ACM, 2 PENN PLAZA, SUITE 701 NEW YORK NY 10121-0701 USA, 10 December 2012 (2012-12-10), pages 203-204, XP058010169, DOI: 10.1145/2407336.2407380 ISBN: 978-1-4503-1469-5

## Description

### TECHNOLOGICAL FIELD

Embodiments of the present invention relate to mediated reality for example augmented reality or virtual reality.

### BACKGROUND

Mediated reality in this document refers to a user experiencing a fully or partially artificial environment.

Augmented reality is a form of mediated reality in which a user experiences a partially artificial, partially real environment. Virtual reality is a form of mediated reality in which a user experiences a fully artificial environment.

The project report "Gaze and Gesture Based Object Interaction in Virtual World", by Dana Slambekova, 31 May 2012, retrieved from the Internet (URL:https://www.cs.rit.edu/~dxs4659/ Report.pdf) on 2015-12-17 discloses gaze and gesture based interactions in a virtual world such as Second Life. The document discloses triggering selection of an object along the user's gaze direction through a select gesture, which is a change of one or both hands from an open state to a closed state. The user can then interact with the object, e.g. scale or rotate the object, with predetermined hand gestures.

The article "Gaze and gesture based object manipulation in virtual worlds", in Virtual Reality Software and Technology, ACM, USA, 10 December 2012, pages 203-204, DOI: 10.1145/2407336.2407380, ISBN: 978-1-4503-1469-5, discloses using a hand gesture to select a gazed object, and rotation or scaling of the selected object by using 3D gestures.

US 2014/258942 A1 discloses using multiple perceptual sensing technologies to capture information about a user's actions to create a more natural user interface for a user to interact with an electronic device. In some embodiments, a virtual cursor is controlled based on the tracked direction of a user's gaze, and then a virtual object is selected by the user through a pinch or grab gesture, as performed by the hand. Then the selected object is moved around the screen based on the movements of one or both of the user's hands.

### BRIEF SUMMARY

According to the invention there is provided a method comprising: enabling a first user-input mode, in which user selection of a displayed virtual object in a virtual scene is in response to a combination of gaze direction detection and selection gesture detection; enabling in response to user selection of the displayed virtual object in the virtual scene during the first user-input mode, a second different user-input mode for the selected virtual object, in which performance of an action in relation to the selected virtual object in the virtual scene is in response to action gesture detection without dependence upon gaze detection; and during the second user-input mode, enabling selection of a displayed further virtual object in the virtual scene in response to a combination of gaze direction detection and selection gesture detection.

According to various, but not necessarily all, embodiments of the invention there is provided examples as claimed in the appended claims.

### BRIEF DESCRIPTION

For a better understanding of various examples that are useful for understanding the brief description, reference will now be made by way of example only to the accompanying drawings in which:
Figs 1A-1C and 2A-2C illustrate examples of mediated reality in which Figs 1A, 1B, 1C illustrate the same virtual space and different points of view and Figs 2A, 2B, 2C illustrate a virtual scene from the perspective of the respective points of view;
Fig 3A illustrates an example of a real space and Fig 3B illustrates an example of a real scene that partially corresponds with the virtual scene of Fig 1B;
Fig 4 illustrates an example of an apparatus that is operable to enable mediated reality and/or augmented reality and/or virtual reality;
Fig 5A illustrates an example of a method for enabling mediated reality and/or augmented reality and/or virtual reality;
Fig 5B illustrates an example of a method for updating a model of the virtual space for augmented reality;
Figs 6A and 6B illustrate examples of apparatus that enable display of at least parts of the virtual scene to a user;
Fig 7A illustrates an example of a gesture in a real space and Fig 7B illustrates a corresponding representation of the gesture rendered in the virtual scene;
Fig 8 illustrates an example of a method for selecting and acting upon a virtual object;
Fig 9 illustrates an example of a method for selecting and acting upon a virtual object;
Fig 10 illustrates an example of a method for selecting and acting upon multiple virtual objects; and
Figs 11-14 illustrate some examples of gaze and selection gesture detection and action gesture detection.

### DETAILED DESCRIPTION

The Figures illustrate methods for selecting, acting upon and de-selecting a virtual object in a virtual scene. Selecting involves both gaze detection and gesture detection, whereas acting upon the selected virtual object involves gesture detection and does not require gaze detection.

### DEFINITIONS

"virtual space" refers to fully or partially artificial environment, which may be three dimensional.
"virtual scene" refers to a representation of the virtual space viewed from a particular point of view within the virtual space.
"real space" refers to a real environment, which may be three dimensional.
"real scene" refers to a representation of the real space viewed from a particular point of view within the real space.
"mediated reality" in this document refers to a user visually experiencing a fully or partially artificial environment (a virtual space) as a virtual scene at least partially displayed by a computer to a user. The virtual scene is determined by a point of view within the virtual space and a field of view. Displaying the virtual scene means providing it in a form that can be seen by the user.
"augmented reality" in this document refers to a form of mediated reality in which a user visually experiences a partially artificial environment (a virtual space) as a virtual scene comprising a real scene of a physical real world environment (real space) supplemented by one or more visual elements displayed by an apparatus to a user;
"virtual reality" in this document refers to a form of mediated reality in which a user visually experiences a fully artificial environment (a virtual space) as a virtual scene displayed by an apparatus to a user;
"perspective-mediated" as applied to mediated reality, augmented reality or virtual reality means that user actions determine the point of view within the virtual space, changing the virtual scene;
"first person perspective-mediated" as applied to mediated reality, augmented reality or virtual reality means perspective mediated with the additional constraint that the user's real point of view determines the point of view within the virtual space;
"third person perspective-mediated" as applied to mediated reality, augmented reality or virtual reality means perspective mediated with the additional constraint that the user's real point of view does not determine the point of view within the virtual space;
"user interactive-mediated" as applied to mediated reality, augmented reality or virtual reality means that user actions at least partially determine what happens within the virtual space;
"displaying" means providing in a form that is perceived visually by the user.

### DESCRIPTION

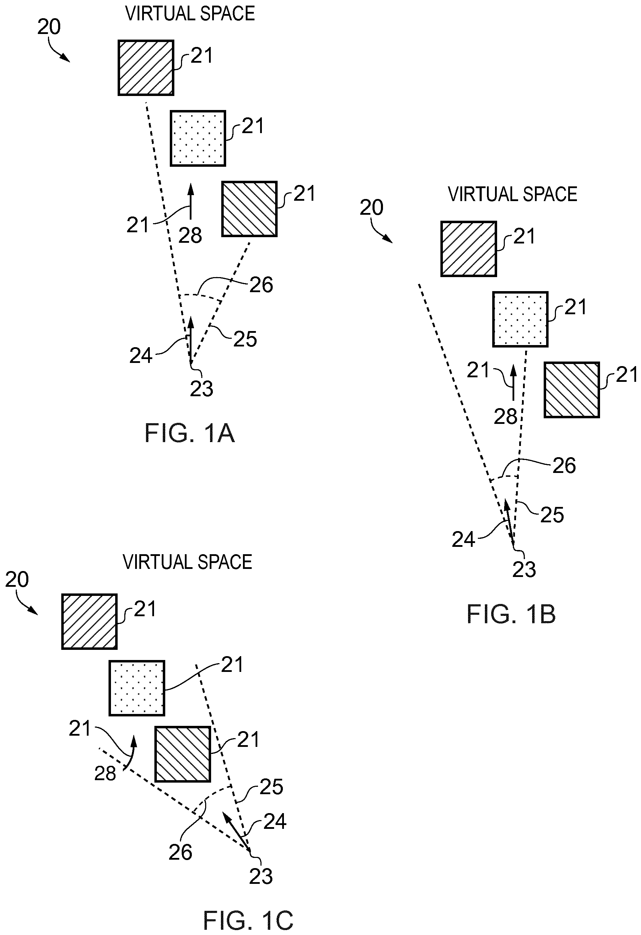

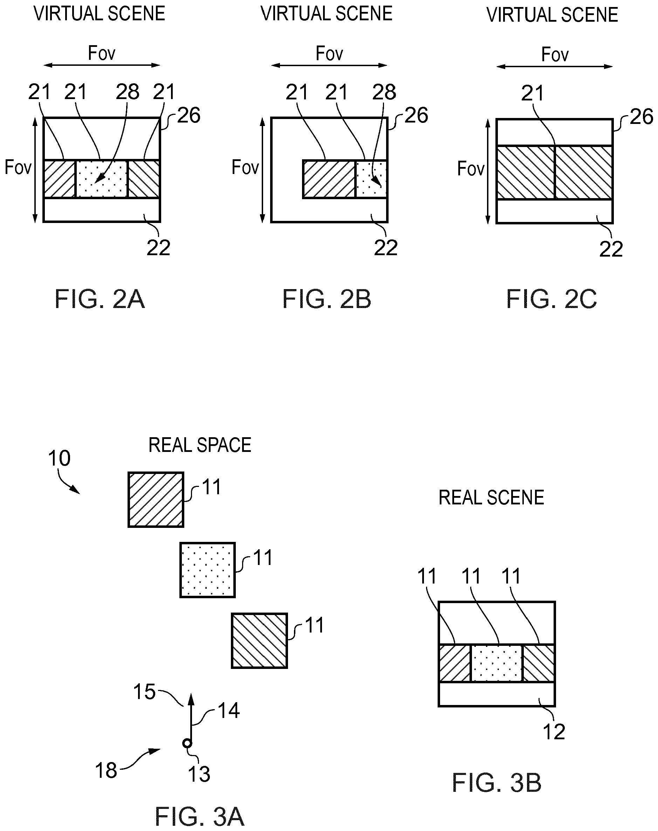

Figs 1A-1C and 2A-2C illustrate examples of mediated reality. The mediated reality may be augmented reality or virtual reality.
Figs 1A, 1B, 1C illustrate the same virtual space 20 comprising the same virtual objects 21, however, each Fig illustrates a different point of view 24. The position and direction of a point of view 24 can change independently. The direction but not the position of the point of view 24 changes from Fig 1A to Fig 1B. The direction and the position of the point of view 24 changes from Fig 1B to Fig 1C.
Figs 2A, 2B, 2C illustrate a virtual scene 22 from the perspective of the different points of view 24 of respective Figs 1A, 1B, 1C. The virtual scene 22 is determined by the point of view 24 within the virtual space 20 and a field of view 26. The virtual scene 22 is at least partially displayed to a user.

The virtual scenes 22 illustrated may be mediated reality scenes, virtual reality scenes or augmented reality scenes. A virtual reality scene displays a fully artificial virtual space 20. An augmented reality scene displays a partially artificial, partially real virtual space 20.

The mediated reality, augmented reality or virtual reality may be user interactive-mediated. In this case, user actions at least partially determine what happens within the virtual space 20. This may enable interaction with a virtual object 21 such as a visual element 28 within the virtual space 20.

The mediated reality, augmented reality or virtual reality may be perspective-mediated. In this case, user actions determine the point of view 24 within the virtual space 20, changing the virtual scene 22. For example, as illustrated in Figs 1A, 1B, 1C a position 23 of the point of view 24 within the virtual space 20 may be changed and/or a direction or orientation 25 of the point of view 24 within the virtual space 20 may be changed. If the virtual space 20 is three-dimensional, the position 23 of the point of view 24 has three degrees of freedom e.g. up/down, forward/back, left/right and the direction 25 of the point of view 24 within the virtual space 20 has three degrees of freedom e.g. roll, pitch, yaw. The point of view 24 may be continuously variable in position 23 and/or direction 25 and user action then changes the position and/or direction of the point of view 24 continuously. Alternatively, the point of view 24 may have discrete quantised positions 23 and/or discrete quantised directions 25 and user action switches by discretely jumping between the allowed positions 23 and/or directions 25 of the point of view 24.

Fig 3A illustrates a real space 10 comprising real objects 11 that partially corresponds with the virtual space 20 of Fig 1A. In this example, each real object 11 in the real space 10 has a corresponding virtual object 21 in the virtual space 20, however, each virtual object 21 in the virtual space 20 does not have a corresponding real object 11 in the real space 10. In this example, one of the virtual objects 21, the computer-generated visual element 28, is an artificial virtual object 21 that does not have a corresponding real object 11 in the real space 10.

A linear mapping exists between the real space 10 and the virtual space 20 and the same mapping exists between each real object 11 in the real space 10 and its corresponding virtual object 21. The relative relationship of the real objects 11 in the real space 10 is therefore the same as the relative relationship between the corresponding virtual objects 21 in the virtual space 20.

Fig 3B illustrates a real scene 12 that partially corresponds with the virtual scene 22 of Fig 1B, it includes real objects 11 but not artificial virtual objects. The real scene is from a perspective corresponding to the point of view 24 in the virtual space 20 of Fig 1A. The real scene 12 content is determined by that corresponding point of view 24 and the field of view 26.

Fig 2A may be an illustration of an augmented reality version of the real scene 12 illustrated in Fig 3B. The virtual scene 22 comprises the real scene 12 of the real space 10 supplemented by one or more visual elements 28 displayed by an apparatus to a user. The visual elements 28 may be a computer-generated visual element. In a see-through arrangement, the virtual scene 22 comprises the actual real scene 12 which is seen through a display of the supplemental visual element(s) 28. In a see-video arrangement, the virtual scene 22 comprises a displayed real scene 12 and displayed supplemental visual element(s) 28. The displayed real scene 12 may be based on an image from a single point of view 24 or on multiple images from different points of view 24 at the same time, processed to generate an image from a single point of view 24.

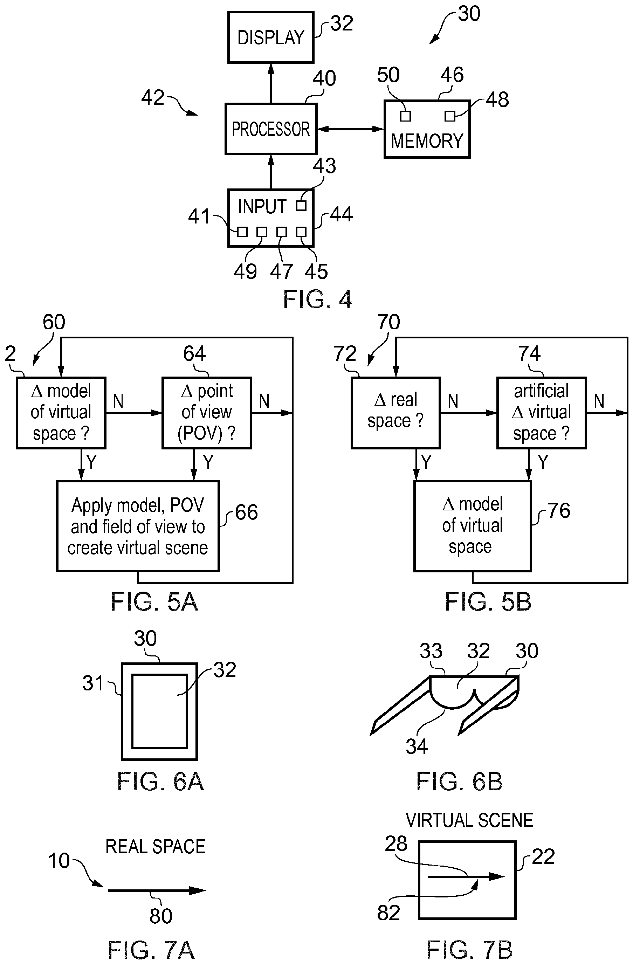

Fig 4 illustrates an example of an apparatus 30 that is operable to enable mediated reality and/or augmented reality and/or virtual reality.

The apparatus 30 comprises a display 32 for providing at least parts of the virtual scene 22 to a user in a form that is perceived visually by the user. The display 32 may be a visual display that provides light that displays at least parts of the virtual scene 22 to a user. Examples of visual displays include liquid crystal displays, organic light emitting displays, emissive, reflective, transmissive and transflective displays, direct retina projection display, near eye displays etc.

The display 32 is controlled in this example but not necessarily all examples by a controller 42.

Implementation of a controller 42 may be as controller circuitry. The controller 42 may be implemented in hardware alone, have certain aspects in software including firmware alone or can be a combination of hardware and software (including firmware).

As illustrated in Fig 4 the controller 42 may be implemented using instructions that enable hardware functionality, for example, by using executable computer program instructions 48 in a general-purpose or special-purpose processor 40 that may be stored on a computer readable storage medium (disk, memory etc) to be executed by such a processor 40.

The processor 40 is configured to read from and write to the memory 46. The processor 40 may also comprise an output interface via which data and/or commands are output by the processor 40 and an input interface via which data and/or commands are input to the processor 40.

The memory 46 stores a computer program 48 comprising computer program instructions (computer program code) that controls the operation of the apparatus 30 when loaded into the processor 40. The computer program instructions, of the computer program 48, provide the logic and routines that enables the apparatus to perform the methods illustrated in Figs 5A & 5B. The processor 40 by reading the memory 46 is able to load and execute the computer program 48.

The apparatus 30 therefore comprises:
at least one processor 40; and
at least one memory 46 including computer program code 48
the at least one memory 46 and the computer program code 48 configured to, with the at least one processor 40, cause the apparatus 30 at least to perform:
   enabling a first user-input mode, in which user selection of a displayed virtual object in a virtual scene is in response to a combination of gaze direction detection and selection gesture detection; and
   enabling in response to user selection of the displayed virtual object in the virtual scene during the first user-input mode, a second different user-input mode for the selected virtual object, in which performance of an action in relation to the selected virtual object in the virtual scene is in response to action gesture detection without dependence upon gaze detection.

The computer program 48 may arrive at the apparatus 30 via any suitable delivery mechanism. The delivery mechanism may be, for example, a non-transitory computer-readable storage medium, a computer program product, a memory device, a record medium such as a compact disc read-only memory (CD-ROM) or digital versatile disc (DVD), an article of manufacture that tangibly embodies the computer program 48. The delivery mechanism may be a signal configured to reliably transfer the computer program 48. The apparatus 30 may propagate or transmit the computer program 48 as a computer data signal.

Although the memory 46 is illustrated as a single component/circuitry it may be implemented as one or more separate components/circuitry some or all of which may be integrated/removable and/or may provide permanent/semi-permanent/ dynamic/cached storage.

Although the processor 40 is illustrated as a single component/circuitry it may be implemented as one or more separate components/circuitry some or all of which may be integrated/removable. The processor 40 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.
This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

The blocks illustrated in the Figs 5A & 5B may represent steps in a method and/or sections of code in the computer program 48. The illustration of a particular order to the blocks does not necessarily imply that there is a required or preferred order for the blocks and the order and arrangement of the block may be varied. Furthermore, it may be possible for some blocks to be omitted.

The apparatus 30 may enable mediated reality and/or augmented reality and/or virtual reality, for example using the method 60 illustrated in Fig 5A or a similar method. The controller 42 stores and maintains a model 50 of the virtual space 20. The model may be provided to the controller 42 or determined by the controller 42. For example, sensors in input circuitry 44 may be used to create overlapping depth maps of the virtual space from different points of view and a three dimensional model may then be produced.

At block 62 it is determined whether or not the model of the virtual space 20 has changed. If the model of the virtual space 20 has changed the method moves to block 66. If the model of the virtual space 20 has not changed the method moves to block 64.

At block 64 it is determined whether or not the point of view 24 in the virtual space 20 has changed. If the point of view 24 has changed the method moves to block 66. If the point of view 24 has not changed the method returns to block 62.

At block 66, a two-dimensional projection of the three-dimensional virtual space 20 is taken from the location 23 and in the direction 25 defined by the current point of view 24. The projection is then limited by the field of view 26 to produce the virtual scene 22.The method then returns to block 62.

Where the apparatus 30 enables augmented reality, the virtual space 20 comprises objects 11 from the real space 10 and also visual elements 28 not present in the real space 10. The combination of such visual elements 28 may be referred to as the artificial virtual space. Fig 5B illustrates a method 70 for updating a model of the virtual space 20 for augmented reality.

At block 72 it is determined whether or not the real space 10 has changed. If the real space 10 has changed the method moves to block 76. If the real space 10 has not changed the method moves to block 74. Detecting a change in the real space 10 may be achieved at a pixel level using differentiating and may be achieved at an object level using computer vision to track objects as they move.

At block 74 it is determined whether or not the artificial virtual space has changed. If the artificial virtual space has changed the method moves to block 76. If the artificial virtual space has not changed the method returns to block 72. As the artificial virtual space is generated by the controller 42 changes to the visual elements 28 are easily detected.

At block 76, the model of the virtual space 20 is updated.

The apparatus 30 may enable user-interactive mediation for mediated reality and/or augmented reality and/or virtual reality. The user input circuitry 44 detects user actions using user input 43. These user actions are used by the controller 42 to determine what happens within the virtual space 20. This may enable interaction with a visual element 28 within the virtual space 20.

The apparatus 30 may enable perspective mediation for mediated reality and/or augmented reality and/or virtual reality. The user input circuitry 44 detects user actions. These user actions are used by the controller 42 to determine the point of view 24 within the virtual space 20, changing the virtual scene 22. The point of view 24 may be continuously variable in position and/or direction and user action changes the position and/or direction of the point of view 24. Alternatively, the point of view 24 may have discrete quantised positions and/or discrete quantised directions and user action switches by jumping to the next position and/or direction of the point of view 24.

The apparatus 30 may enable first person perspective for mediated reality, augmented reality or virtual reality. The user input circuitry 44 detects the user's real point of view 14 using user point of view sensor 45. The user's real point of view is used by the controller 42 to determine the point of view 24 within the virtual space 20, changing the virtual scene 22. Referring back to Fig 3A, a user 18 has a real point of view 14. The real point of view may be changed by the user 18. For example, a real location 13 of the real point of view 14 is the location of the user 18 and can be changed by changing the physical location 13 of the user 18. For example, a real direction 15 of the real point of view 14 is the direction in which the user 18 is looking and can be changed by changing the real direction of the user 18. The real direction 15 may, for example, be changed by a user 18 changing an orientation of their head or view point and/or a user changing a direction of their gaze. A head-mounted apparatus 30 may be used to enable first-person perspective mediation.

In some but not necessarily all examples, the apparatus 30 comprises as part of the input circuitry 44 point of view sensors 45 for determining changes in the real point of view.

For example, positioning technology such as GPS, triangulation (trilateration) by transmitting to multiple receivers and/or receiving from multiple transmitters, acceleration detection and integration may be used to determine a new physical location 13 of the user 18 and real point of view 14.

For example, accelerometers, electronic gyroscopes or electronic compasses may be used to determine a change in an orientation of a user's head or view point and a consequential change in the real direction 15 of the real point of view 14.

For example, pupil tracking technology, based for example on computer vision, may be used to track movement of a user's eye or eyes and therefore determine a direction of a user's gaze and consequential changes in the real direction 15 of the real point of view 14.

The apparatus 30 may comprise as part of the input circuitry 44 image sensors 47 for imaging the real space 10.

An example of an image sensor 47 is a digital image sensor that is configured to operate as a camera. Such a camera may be operated to record static images and/or video images. In some, but not necessarily all embodiments, cameras may be configured in a stereoscopic or other spatially distributed arrangement so that the real space 10 is viewed from different perspectives. This may enable the creation of a three-dimensional image and/or processing to establish depth, for example, via the parallax effect.

In some, but not necessarily all embodiments, the input circuitry 44 comprises depth sensors 49. A depth sensor 49 may comprise a transmitter and a receiver. The transmitter transmits a signal (for example, a signal a human cannot sense such as ultrasound or infrared light) and the receiver receives the reflected signal. Using a single transmitter and a single receiver some depth information may be achieved via measuring the time of flight from transmission to reception. Better resolution may be achieved by using more transmitters and/or more receivers (spatial diversity). In one example, the transmitter is configured to 'paint' the real space 10 with light, preferably invisible light such as infrared light, with a spatially dependent pattern. Detection of a certain pattern by the receiver allows the real space 10 to be spatially resolved. The distance to the spatially resolved portion of the real space 10 may be determined by time of flight and/or stereoscopy (if the receiver is in a stereoscopic position relative to the transmitter).

In some but not necessarily all embodiments, the input circuitry 44 may comprise communication circuitry 41 in addition to or as an alternative to one or more of the image sensors 47 and the depth sensors 49. Such communication circuitry 41 may communicate with one or more remote image sensors 47 in the real space 10 and/or with remote depth sensors 49 in the real space 10.

Figs 6A and 6B illustrate examples of apparatus 30 that enable display of at least parts of the virtual scene 22 to a user.

Fig 6A illustrates a handheld apparatus 31 comprising a display screen as display 32 that displays images to a user and is used for displaying the virtual scene 22 to the user. The apparatus 31 may be moved deliberately in the hands of a user in one or more of the previously mentioned six degrees of freedom. The handheld apparatus 31 may house the sensors 45 for determining changes in the real point of view from a change in orientation of the apparatus 31.

The handheld apparatus 31 may be or may be operated as a see-video arrangement for augmented reality that enables a live or recorded video of a real scene 12 to be displayed on the display 32 for viewing by the user while one or more visual elements 28 are simultaneously displayed on the display 32 for viewing by the user. The combination of the displayed real scene 12 and displayed one or more visual elements 28 provides the virtual scene 22 to the user.

If the handheld apparatus 31 has a camera mounted on a face opposite the display 32, it may be operated as a see-video arrangement that enables a live real scene 12 to be viewed while one or more visual elements 28 are displayed to the user to provide in combination the virtual scene 22.

Fig 6B illustrates a head-mounted apparatus 33 comprising a display 32 that displays images to a user. The head-mounted apparatus 33 may be moved automatically when a head of the user moves. The head-mounted apparatus 33 may house the sensors 45 for gaze direction detection and/or selection gesture detection.

The head-mounted apparatus 33 may be a see-through arrangement for augmented reality that enables a live real scene 12 to be viewed while one or more visual elements 28 are displayed by the display 32 to the user to provide in combination the virtual scene 22. In this case a visor 34, if present, is transparent or semi-transparent so that the live real scene 12 can be viewed through the visor 34.

The head-mounted apparatus 33 may be operated as a see-video arrangement for augmented reality that enables a live or recorded video of a real scene 12 to be displayed by the display 32 for viewing by the user while one or more visual elements 28 are simultaneously displayed by the display 32 for viewing by the user. The combination of the displayed real scene 12 and displayed one or more visual elements 28 provides the virtual scene 22 to the user. In this case a visor 34 is opaque and may be used as display 32.

Other examples of apparatus 30 that enable display of at least parts of the virtual scene 22 to a user may be used.

For example, one or more projectors may be used that project one or more visual elements to provide augmented reality by supplementing a real scene of a physical real world environment (real space).

For example, multiple projectors or displays may surround a user to provide virtual reality by presenting a fully artificial environment (a virtual space) as a virtual scene to the user.

Referring back to Fig 4, an apparatus 30 may enable user-interactive mediation for mediated reality and/or augmented reality and/or virtual reality. The user input circuitry 44 detects user actions using user input 43. These user actions are used by the controller 42 to determine what happens within the virtual space 20. This may enable interaction with a visual element 28 within the virtual space 20.

The detected user actions may, for example, be gestures performed in the real space 10. Gestures may be detected in a number of ways. For example, depth sensors 49 may be used to detect movement of parts of a user 18 and/or or image sensors 47 may be used to detect movement of parts of a user 18 and/or positional/movement sensors attached to a limb of a user 18 may be used to detect movement of the limb.

Object tracking may be used to determine when an object or user changes. For example, tracking the object on a large macro-scale allows one to create a frame of reference that moves with the object. That frame of reference can then be used to track time-evolving changes of shape of the object, by using temporal differencing with respect to the object. This can be used to detect small scale human motion such as gestures, hand movement, facial movement. These are scene independent user (only) movements relative to the user.

The apparatus 30 may track a plurality of objects and/or points in relation to a user's body, for example one or more joints of the user's body. In some examples, the apparatus 30 may perform full body skeletal tracking of a user's body.

The tracking of one or more objects and/or points in relation to a user's body may be used by the apparatus 30 in gesture recognition and so on.

Referring to Fig 7A, a particular gesture 80 in the real space 10 is a gesture user input used as a 'user control' event by the controller 42 to determine what happens within the virtual space 20. A gesture user input is a gesture 80 that has meaning to the apparatus 30 as a user input.

Referring to Fig 7B, in some but not necessarily all examples, a corresponding representation of the gesture 80 in real space is rendered in the virtual scene 22 by the apparatus 30. The representation involves one or more visual elements 28 moving 82 to replicate or indicate the gesture 80 in the virtual scene 22.

A gesture 80 may be static or moving. A moving gesture may comprise a movement or a movement pattern comprising a series of movements. For example it could be making a circling motion or a side to side or up and down motion or the tracing of a sign in space. A moving gesture may, for example, be an apparatus-independent gesture or an apparatus-dependent gesture. A moving gesture may involve movement of a user input object e.g. a user body part or parts, or a further apparatus, relative to the sensors. The body part may comprise the user's hand or part of the user's hand such as one or more fingers and thumbs. In other examples, the user input object may comprise a different part of the body of the user such as their head or arm. Three-dimensional movement may comprise motion of the user input object in any of six degrees of freedom. The motion may comprise the user input object moving towards or away from the sensors as well as moving in a plane parallel to the sensors or any combination of such motion.

A gesture 80 may be a non-contact gesture. A non-contact gesture does not contact the sensors at any time during the gesture.

A gesture 80 may be an absolute gesture that is defined in terms of an absolute displacement from the sensors. Such a gesture may be tethered, in that it is performed at a precise location in the real space 10. Alternatively a gesture 80 may be a relative gesture that is defined in terms of relative displacement during the gesture. Such a gesture may be un-tethered, in that it need not be performed at a precise location relative in the real space 10 and may be performed at a large number of arbitrary locations.

A gesture 80 may be defined as evolution of displacement, of a tracked point relative to an origin, with time. It may, for example, be defined in terms of motion using time variable parameters such as displacement, velocity or using other kinematic parameters. An un-tethered gesture may be defined as evolution of relative displacement Δd with relative time Δt.

A gesture 80 may be performed in one spatial dimension (1D gesture), two spatial dimensions (2D gesture) or three spatial dimensions (3D gesture).

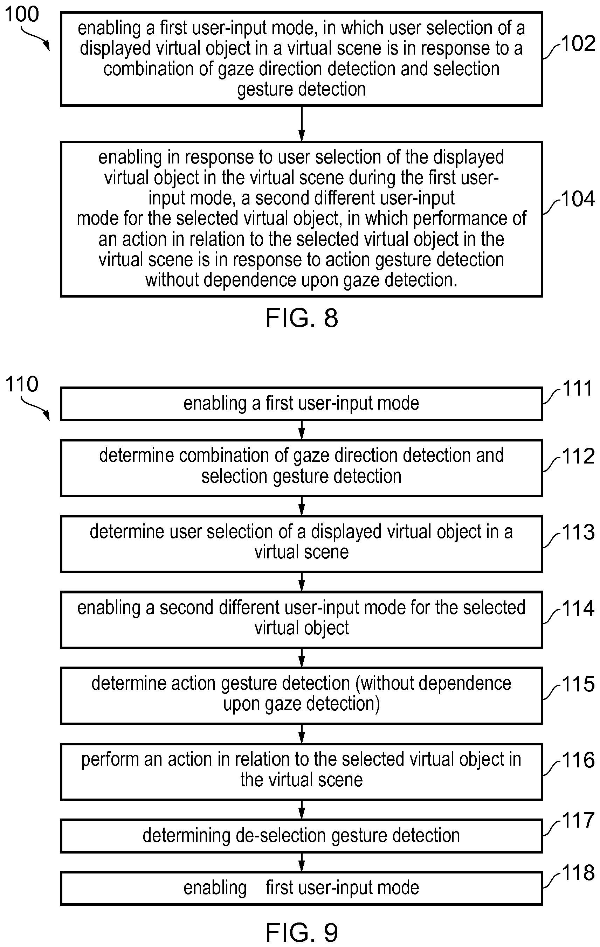

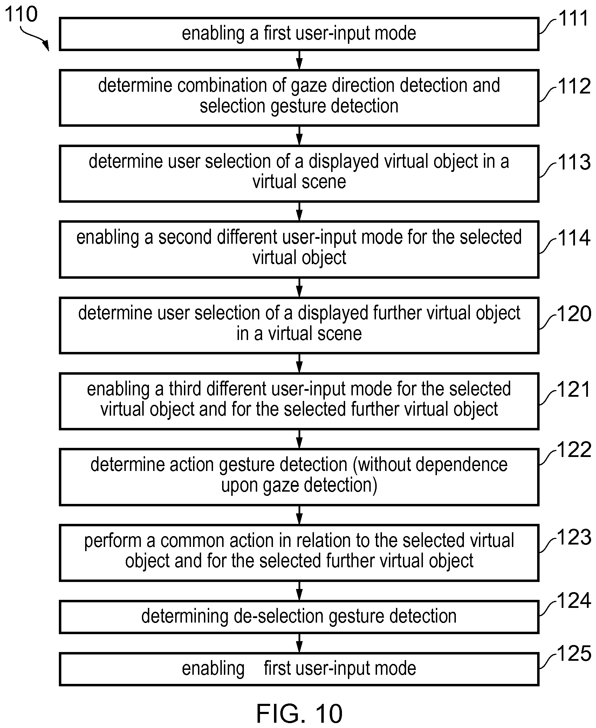

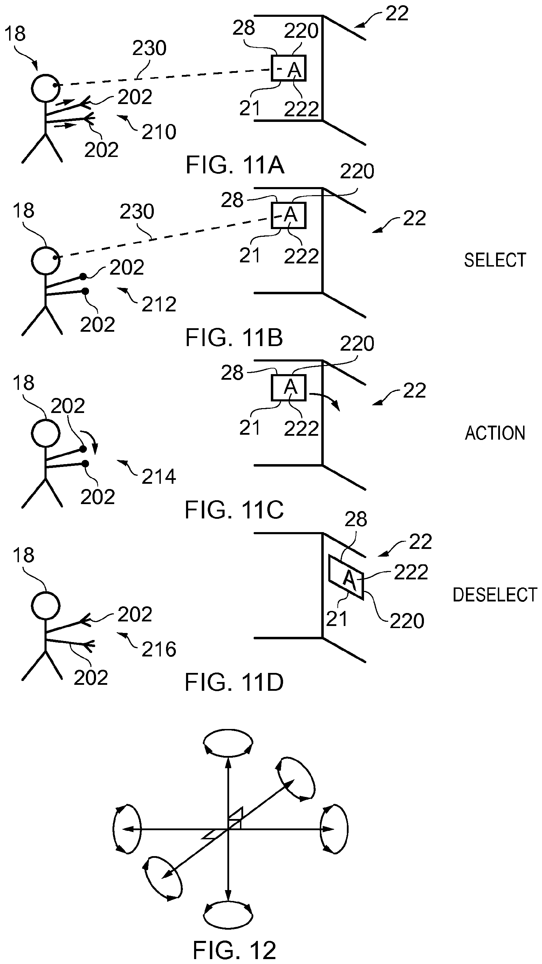

Fig 8 illustrates an example of a general method 100, which may be understood with reference to the more detailed methods 110 of Figs 9 and 10 and the particular implementations described in Figs 11-14. This method 100 may, for example, be performed by the controller 42. The method 100 enables the selection by a user of a virtual object 21 and enables user performance of an action on the selected virtual object 21.

The method 110 comprises, at block 102, enabling a first user-input mode. In the first user-input mode user selection of a displayed virtual object 21 in a virtual scene 22 occurs in response to a combination of gaze direction detection and selection gesture detection.

In response to user selection of the displayed virtual object 21 in the virtual scene during the first user-input mode, the method then comprises, at block 104, enabling a second different user-input mode for the selected virtual object 21. In the second user-input mode, performance of an action in relation to the selected virtual object 21 in the virtual scene 22 is in response to action gesture detection without dependence upon gaze detection.

The user therefore selects a displayed virtual object 21 using both gaze direction and a selection gesture but then performs an action on the selected virtual object 21 using only an action gesture without the need for combining the action gesture with a particular gaze direction.

Fig 9 illustrates a more detailed example 110 of the method 100 of Fig 8.

At block 111, the method 110 comprises enabling a first user-input mode.

While in this first user-input mode, at block 112 the method 110 determines when there is a combination of gaze direction detection for a displayed virtual object 21 and selection gesture detection for the displayed virtual object 21. In response, the method 110 at block 113 determines that the user has selected the displayed virtual object 21 in the virtual scene 22 and, and at block 114 enables a second different user-input mode for the selected virtual object 21.

While in this second user-input mode, at block 115 the method 110 determines when there is action gesture detection for the selected displayed virtual object 21 (without requiring gaze detection). In response, the method 110 at block 116 performs an action in relation to the selected virtual object 21 in the virtual scene 22.

While in this second user-input mode, if the method 110 determines that there is de-selection gesture detection, for example as illustrated in block 117, the method 110 returns to the first user-input mode, for example as illustrated at block 118. It should, however, be appreciated that block 117 and 118 may occur at a different stage in the method 110, for example, between blocks 114 & 115, or between blocks 115 & 116.

Fig 10 illustrates a modification to the method 110 illustrated in Fig 9. The blocks 111 to 114 are as described in relation to Fig 10.

While in the second user-input mode, at block 120, if the method 110 determines that there is a selection gesture detection for a further displayed virtual object 21 in the virtual scene 22, for a predetermined length of time, then the user has selected the displayed further virtual object 21 and at block 121 the method 110 enables a third user-input mode for the selected virtual object 21 and the selected further virtual object 21.

While in this third user-input mode, at block 122 the method 110 determines when there is action gesture detection (without requiring gaze detection). In response, the method 110 at block 123 performs a common action in relation to the selected virtual object 21 and the selected further virtual object 21 in the virtual scene 22.

While in the third user-input mode, if the method 110 determines that there is de-selection gesture detection, for example as illustrated in block 124, the method 110 returns to the first user-input mode, for example as illustrated at block 125. It should, however, be appreciated that block 124 and 125 may occur at a different stage in the method 110.

Gaze direction detection may, for example, comprise detection of a gaze of a user towards a displayed virtual object 21 in the virtual scene 22.

Gaze direction detection may, for example, be achieved by measuring a user's head movement without measuring a user's eye movement. Alternatively, gaze direction detection may, for example, be achieved by measuring a user's eye movement without measuring a user's head movement. Alternatively, gaze direction detection may, for example, be achieved by measuring a user's eye movement and measuring a user's head movement.

Once a direction of a user's gaze in the virtual space 20 has been determined, the gaze direction may be translated into putative locations in the virtual space 20. If one or more of the putative locations in the virtual space correspond to a location of a virtual object 21 in the virtual space, then the user's gaze is determined to be towards that virtual object 21.

Selection gesture detection may, for example, comprise detection of one or more gestures towards the displayed virtual object 21 in the virtual scene.

Once a direction of a user's gesture in the virtual space 20 has been determined, the gesture direction may be translated into putative locations in the virtual space 20. If one or more of the putative locations in the virtual space correspond to a location of a virtual object 21 in the virtual space, then the user's gesture is determined to be towards that virtual object 21.

The combination of gaze direction detection and selection gesture detection may, for example, comprise detection of a gaze of a user towards a displayed virtual object 21 in the virtual scene 22 and detection of one or more gestures towards the same displayed virtual object 21 in the virtual scene.

Figs 11-14 illustrate some examples of gaze and selection gesture detection and action gesture detection.

Selection gesture detection may, for example, comprise: detecting a first predetermined gesture 210; and detecting a predetermined change 212 in the first predetermined gesture 210.

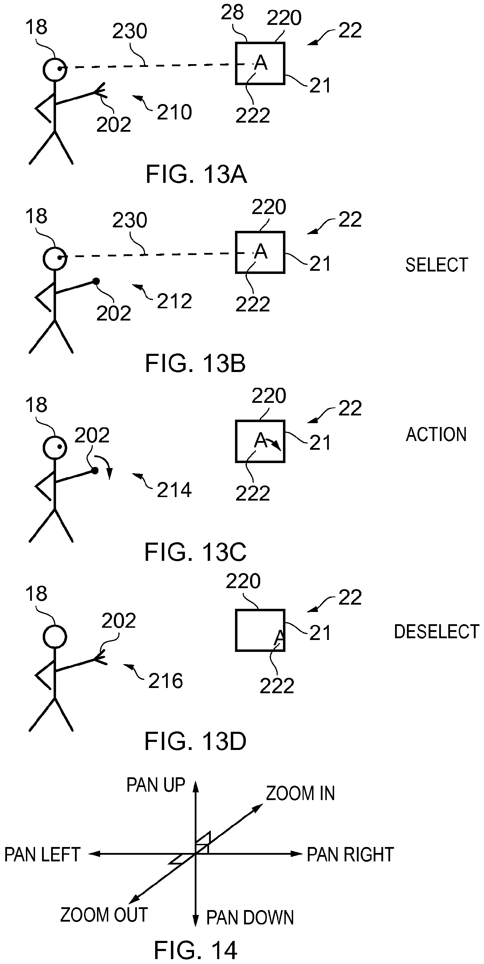

The change in the first predetermined gesture 202 may be a change of a hand or hands 202 from a first state to a second state. Then detecting an action gesture may, for example, comprise maintaining the hand or hands 202 in the second state while moving the hand or hands 202 through space in the second state. A return to the first user input mode, may be achieved in response to changing the hand or hands 202 from the second state to the first state. The first state may be one of fist unclenched and fist clenched and the second state is the other of first unclenched and fist clenched. The first state may be two fists unclenched (Fig 11A, 11D) or one fist unclenched (Fig 13A, 13D) for example. The second state may be two fists clenched (Fig 11B, 11C) or one fist clenched (Fig 13B, 13C) for example.

The virtual object 21 may, for example, be an artificial visual element 28 within the virtual space 20. The action performed in relation to the selected virtual object 21 (artificial visual element 28) in response to action gesture detection may, for example be varying the selected virtual object or varying content associated with the selected virtual object.

In Figs 11A-11D, the action is moving a virtual window 220 in the virtual scene 22 in response to a two-handed action gesture 214. The content 222 in the virtual window 220 moves with the virtual window 220.

In Figs 13A-13D, the action is changing content 222 within a virtual window 220 that is fixed relative to the virtual scene 22 in response to a first one-handed action gesture 214.

Referring to Fig 11A a user 18 gazes 230 towards a virtual window 220 comprising content 222. The virtual content is pinned to a wall in this example. The user performs a two-handed gesture 210 towards the virtual window 220. The two-handed gesture 210 involves having both hands 202 unclenched and extending the user's arms towards the virtual window 220 in a two-handed pushing gesture.

Then as illustrated in Fig 11B, the user while still gazing 230 towards the virtual window 220 clenches both hands to form fists in a two-handed grabbing action 212.

The combination of the gaze towards the virtual window 220 in combination with the sequence of two-handed push 210 followed by two handed grab 212 is detected and causes the virtual window 220 to be 'user selected' by the controller 42.

Referring to Fig 11C, now that the virtual window 220 has been selected, which may be highlighted visually in the virtual scene 22, the user can perform an action gesture 214 to move the virtual window 220 within the virtual scene 22. The action gesture 214 maintains the two-handed grabbing gesture 212 but changes the position of the two fists in space while maintaining approximately the same separation between them. Fig 12 illustrates that the virtual window 220 may, in some examples, be moved in 6 or less degrees of freedom. Motion in the six degrees of freedom corresponds to motion relative to the three orthogonal linear axes (front/back; left/right; up/down) and the three axis of rotation associated with the respective orthogonal linear axes (roll, pitch, yaw).

In Fig 11C, the user 18 moves the selected virtual window 220 to the right from one wall to another.

In Fig 11D, the user 18 de-selects the virtual window 220 by changing the two-handed gesture to a de-selection gesture 216 by opening his or her hands 202 to be unclenched. The moved virtual window 220 is now de-selected and if it is to be moved steps equivalent to Figs 11A to 11D will need to be performed.

Referring to Fig 13A a user 18 gazes 230 towards a virtual window 220 comprising content 222. The content 222 is pinned to a wall in this example. The user performs a one-handed gesture 210 towards the virtual window 220 and content 222. The one-handed gesture 210 involves extending one unclenched hand 202 towards the virtual window 220 and content 222 in a one-handed pushing gesture.

Then as illustrated in Fig 13B, the user while still gazing 230 towards the virtual window 220 and content 222 clenches the extended hand 202 to form a fist in a one-handed grabbing action 212.

The combination of the gaze towards the virtual window 220 and content 222 in combination with the sequence of one-handed push 210 followed by the same handed grab 212 is detected and causes the content 222 to be 'user selected' by the controller 42.

The controller 42 is able to disambiguate user selection of the virtual window 220 and user selection of the content 222 by disambiguating between two-handed and one-handed gestures 210, 212.

Referring to Fig 13C, now that the content 222 has been selected, which may be highlighted visually in the virtual scene 22, the user can perform an action gesture 214 to change the content 222 within the fixed virtual window 220. The virtual window 220 does not move relative to the virtual scene 22 but the content 222 changes within the virtual window 220. The action gesture 214 maintains the one-handed grabbing gesture 212 but changes the position of the one fist in space. Fig 14 illustrates that the content 222 may, in some examples, be moved in 3 degrees of freedom corresponding to motion relative to the three orthogonal linear axes (front/back; left/right; up/down). For example, content 222 may be panned left/right and/or up/down within the virtual window 220 in response to a first one-handed action gesture 214 in respective left/right directions and/or up/down directions. For example, content 222 may be re-sized by zooming in or zooming out relative to the virtual window 220 in response to the first one-handed action gesture 214 in respective forward or backwards directions.

In Fig 13C, the user 18 moves the selected content 222 to the right.

In Fig 13D, the user 18 de-selects the content 222 by changing the one-handed gesture to a de-selection gesture 216 by opening his or her hand 202 to be unclenched. The moved content 222 is now de-selected and if it is to be moved steps equivalent to Figs 13A to 13D will need to be performed.

It will be appreciated that the examples described above in relation to Figs 11-14 correspond to the method 100 of Fig 8 and method 110 of Fig 9. However, the method 110 of Fig 10 may also be used in the examples described above in relation to Figs 11-14. During the second user-input mode, the controller 42 enables selection of a displayed further virtual object 21 in the virtual scene 22 in response to a combination of gaze direction detection and selection gesture detection. It may for example be detected that the gesture 212 used to select the virtual object 21 has not changed and that the user's gaze has been directed to a further virtual object 21 for a time exceeding a predetermined threshold time. A visual indication may be provided of how the time the user's gaze has been directed to a further virtual object compares with the predetermined threshold time. In response to user selection of the displayed further virtual object 21 in the virtual scene 22 during the second user-input mode, a third different user-input mode for the selected virtual object 21 and the selected further virtual object 21 is enabled. In the third user-input mode, the user action gesture 214, which in the second user input mode would have applied to only the virtual object 21, now in the third user input mode applies to both the selected virtual object and the selected further virtual object in the virtual scene 22. The de-selection gesture, when detected, causes a return to the first user input mode i.e. it de-selects both the virtual object 21 and the further virtual object 21.

The user action gesture 214 is not dependent upon gaze detection, whereas the gestures 210, 212 are dependent upon gaze 230 in that user action gesture 214 has meaning irrespective of gaze 230 whereas gestures 210, 212 have meaning in combination with specific gaze conditions.

The de-select gesture 216 is not dependent upon gaze detection, whereas the gestures 210, 212 are dependent upon gaze 230 in that de-select gesture 216 has meaning irrespective of gaze 230 whereas gestures 210, 212 have meaning in combination with specific gaze conditions.

The methods described in relation to Figs 8 to 14 may be performed by an apparatus 30 for mediated reality, virtual reality or augmented reality, for example, they may be performed, for example, as described with reference to Figs 6A, 6B and the additional examples. For example, the head-mounted apparatus 33 of Fig 6B may be configured for augmented reality. The head-mounted apparatus 33 may provide a see-through arrangement for augmented reality and/or a see-video arrangement for augmented reality.

Such an apparatus 30 may be configured for perspective mediation. The user input circuitry 44 may detect user actions that are used by the controller 42 to determine the point of view 24 within the virtual space 20, changing the virtual scene 22 as described above.

Where the apparatus 30 provides augmented reality, the apparatus 30 may be configured for first person perspective mediation. The user input circuitry 44 may detect the user's real point of view 14 using user point of view sensor 45. The user's real point of view is used by the controller 42 to determine the point of view 24 within the virtual space 20, changing the virtual scene 22. The real direction 15 may, for example, be changed by a user 18 changing an orientation of their head or view point and/or a user changing a direction of their gaze.

The methods described in relation to Figs 8 to 14, describe the use of various gestures 210, 212, 214, 216 for selecting (with gaze), performing an action on and de-selecting a virtual object (or objects). The gestures described above are illustrative and different gestures may be used.

The gestures may, for example, be movement of a user input object e.g. a user body part or parts, or a further apparatus. The movement may be in three-dimensions. The gestures may be non-contact gestures that do not contact the apparatus 30. The gestures may be relative gestures (measured by relative displacement during the gesture) and may be un-tethered (not precise location).

In some but not necessarily all embodiments, a representation of a gesture is rendered in the virtual scene 22 by the apparatus 30. The representation involves one or more visual elements moving to replicate or indicate the gesture in the virtual scene 22. Where a structural feature has been described, it may be replaced by means for performing one or more of the functions of the structural feature whether that function or those functions are explicitly or implicitly described.

As used here 'module' refers to a unit or apparatus that excludes certain parts/components that would be added by an end manufacturer or a user. The controller 42 may, for example be a module. The apparatus 30 may be a module. The input circuitry may be a module or comprise modules. The display 32 may be a module.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this brief description, reference has been made to various examples. The description of features or functions in relation to an example indicates that those features or functions are present in that example. The use of the term 'example' or 'for example' or 'may' in the text denotes, whether explicitly stated or not, that such features or functions are present in at least the described example, whether described as an example or not, and that they can be, but are not necessarily, present in some of or all other examples. Thus 'example', 'for example' or 'may' refers to a particular instance in a class of examples. A property of the instance can be a property of only that instance or a property of the class or a property of a subclass of the class that includes some but not all of the instances in the class. It is therefore implicitly disclosed that a feature described with reference to one example but not with reference to another example, can where possible be used in that other example but does not necessarily have to be used in that other example.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

## Claims

1. A method (110) comprising:
enabling (111) a first user-input mode, in which user selection of a displayed virtual object in a virtual scene is determined (112) in response to determining (112) a combination of gaze direction detection and selection gesture detection;
enabling (114) in response to user selection of the displayed virtual object in the virtual scene during the first user-input mode, a second different user-input mode for the selected virtual object, in which performance (116) of an action in relation to the selected virtual object in the virtual scene is in response to action gesture detection (115) without dependence upon gaze detection; and
**characterised by,**
during the second user-input mode, enabling selection (120) of a displayed further virtual object in the virtual scene in response to a combination of gaze direction detection and selection gesture detection.

2. A method as claimed in claim 1, wherein gaze detection comprises detection of a gaze of a user towards the displayed virtual object in the virtual scene.

3. A method as claimed in claim 1 or 2, wherein selection gesture detection in the first user-input mode comprises detecting a first predetermined gesture; and detecting a predetermined change in the first predetermined gesture.

4. A method as claimed in claim 3, wherein the change in the first predetermined gesture is a change of a hand or hands from a first state to a second state.

5. A method as claimed in claim 4, comprising detecting an action gesture wherein the action gesture comprises maintaining the hand or hands in the second state while moving the hand or hands through space in the second state.

6. A method as claimed in claim 4, comprising enabling a return to the first user input mode, in response to changing the hand or hands from the second state to the first state.

7. A method as claimed in claim 4, 5 or 6, wherein the first state is one of fist unclenched and fist clenched and the second state is other of first unclenched and fist clenched.

8. A method as claimed in any preceding claim, wherein the performance of the action in relation to the selected virtual object in response to action gesture detection without dependence upon gaze detection, comprises varying the selected virtual object.

9. A method as claimed in any preceding claim, wherein the performance of the action in relation to the selected virtual object in response to action gesture detection without dependence upon gaze detection, comprises varying content associated with the selected virtual object.

10. A method as claimed in any preceding claim, wherein the performance of the action in relation to the selected virtual object in response to action gesture detection without dependence upon gaze detection, comprises one or more of:
moving virtual window comprising content in response to a two-handed action gesture;
panning content within a virtual window in response to a first one-handed action gesture;
re-sizing content within a virtual window in response to a second one-handed action gesture, different to the first one handed gesture.

11. A method as claimed in any preceding claim, further comprising:
enabling (121) in response to user selection of the displayed further virtual object in the virtual scene during the second user-input mode, a third different user-input mode for the selected virtual object and the selected further virtual object, in which performance (123) of a common action in relation to the selected virtual object and the selected further virtual object in the virtual scene is in response to action gesture detection (122) without dependence upon gaze detection.

12. A method as claimed in any preceding claim, further comprising enabling (118, 125) a return to the first user input mode, in response to de-selection gesture detection (117, 124) without dependence upon gaze detection.

13. An apparatus (30, 31, 33) comprising means for performing the method of at least one of claims 1 to 12.

14. An apparatus as claimed in claim 13 further configured as a head-mounted apparatus (33) for augmented reality.

15. Computer program code (48), that when performed by at least one processor (40), causes at least the method of at least one of claims 1 to 12 to be performed.

## Patentansprüche

1. Verfahren (110), Folgendes umfassend:
Aktivieren (111) eines ersten Benutzereingabemodus, in dem eine Benutzerselektion eines angezeigten virtuellen Objekts in einer virtuellen Szene als Reaktion auf Bestimmen (112) einer Kombination aus einer Blickrichtungsdetektion und einer Selektionsgestendetektion bestimmt wird (112);
Aktivieren (114), als Reaktion auf eine Benutzerselektion des angezeigten virtuellen Objekts in der virtuellen Szene während des ersten Benutzereingabemodus, eines zweiten verschiedenen Benutzereingabemodus für das selektierte virtuelle Objekt, in dem eine Durchführung (116) einer Aktion in Bezug auf das selektierte virtuelle Objekt in der virtuellen Szene als Reaktion auf eine Aktionsgestendetektion (115) ohne Abhängigkeit von einer Blickdetektion geschieht; und
**gekennzeichnet durch**
Aktivieren einer Selektion (120), während des zweiten Benutzereingabemodus, eines angezeigten weiteren virtuellen Objekts in der virtuellen Szene als Reaktion auf eine Kombination aus Blickrichtungsdetektion und Selektionsgestendetektion.

2. Verfahren nach Anspruch 1, wobei
eine Blickdetektion eine Detektion eines Blicks eines Benutzers in Richtung auf das angezeigte virtuelle Objekt in der virtuellen Szene umfasst.

3. Verfahren nach Anspruch 1 oder 2, wobei eine Selektionsgestendetektion in dem ersten Benutzereingabemodus Detektieren einer ersten vorbestimmten Geste und Detektieren einer vorbestimmten Veränderung in der ersten vorbestimmten Geste umfasst.

4. Verfahren nach Anspruch 3, wobei die Veränderung der ersten vorbestimmten Geste eine Veränderung einer Hand oder von Händen aus einem ersten Zustand in einen zweiten Zustand ist.

5. Verfahren nach Anspruch 4, Detektieren einer Aktionsgeste umfassend, wobei die Aktionsgeste Halten der Hand oder Hände in dem zweiten Zustand umfasst, während die Hand oder Hände in dem zweiten Zustand durch den Raum bewegt werden.

6. Verfahren nach Anspruch 4, ein Aktivieren einer Rückkehr in den ersten Benutzereingabemodus als Reaktion auf ein Verändern der Hand oder Hände aus dem zweiten Zustand in den ersten Zustand umfassend.

7. Verfahren nach Anspruch 4, 5 oder 6, wobei der erste Zustand entweder eine ungeballte Faust oder eine geballte Faust ist und der zweite Zustand der andere der ungeballten Faust und der geballten Faust ist.

8. Verfahren nach einem der vorhergehenden Ansprüche, wobei die Durchführung der Aktion in Bezug auf das selektierte virtuelle Objekt als Reaktion auf eine Aktionsgestendetektion ohne Abhängigkeit von einer Blickdetektion Variieren des selektierten virtuellen Objekts umfasst.

9. Verfahren nach einem der vorhergehenden Ansprüche, wobei die Durchführung der Aktion in Bezug auf das selektierte virtuelle Objekt als Reaktion auf eine Aktionsgestendetektion ohne Abhängigkeit von einer Blickdetektion Variieren von Inhalt umfasst, der dem selektierten virtuellen Objekt zugeordnet ist.

10. Verfahren nach einem der vorhergehenden Ansprüche, wobei die Durchführung der Aktion in Bezug auf das selektierte virtuelle Objekt als Reaktion auf eine Aktionsgestendetektion ohne Abhängigkeit von einer Blickdetektion mindestens eines des Folgenden umfasst:
Bewegen eines virtuellen Fensters, das Inhalt umfasst, als Reaktion auf eine zweihändige Aktionsgeste;
Schwenken von Inhalt innerhalb eines virtuellen Fensters als Reaktion auf eine erste einhändige Aktionsgeste;
Neuskalieren von Inhalt innerhalb eines virtuellen Fensters als Reaktion auf eine zweite einhändige Aktionsgeste, die von der ersten einhändigen Geste verschieden ist.

11. Verfahren nach einem der vorhergehenden Ansprüche, weiterhin umfassend:
Aktivieren (121), als Reaktion auf eine Benutzerselektion des angezeigten weiteren virtuellen Objekts in der virtuellen Szene während des zweiten Benutzereingabemodus, eines dritten verschiedenen Benutzereingabemodus für das selektierte virtuelle Objekt und das selektierte weitere virtuelle Objekt, in dem eine Durchführung (123) einer gemeinsamen Aktion in Bezug auf das selektierte virtuelle Objekt und das selektierte weitere virtuelle Objekt in der virtuellen Szene als Reaktion auf eine Aktionsgestendetektion (122) ohne Abhängigkeit von einer Blickdetektion geschieht.

12. Verfahren nach einem der vorhergehenden Ansprüche, weiterhin Aktivieren (118, 125) einer Rückkehr in den ersten Benutzereingabemodus als Reaktion auf eine Deselektionsgestendetektion (117, 124) ohne Abhängigkeit von einer Blickdetektion umfassend.

13. Vorrichtung (30, 31, 33), Mittel zum Durchführen des Verfahrens nach mindestens einem der Ansprüche 1 bis 12 umfassend.

14. Vorrichtung nach Anspruch 13, die weiterhin als eine am Kopf getragene Vorrichtung (33) für erweiterte Realität eingerichtet ist.

15. Computerprogrammcode (48), der, wenn er durch mindestens einen Prozessor (40) ausgeführt wird, mindestens bewirkt, dass das Verfahren nach mindestens einem der Ansprüche 1 bis 12 ausgeführt wird.

## Revendications

1. Procédé (110) comprenant :
l'activation (111) d'un premier mode d'entrée utilisateur, dans lequel la sélection par l'utilisateur d'un objet virtuel affiché dans une scène virtuelle est déterminée (112) en réponse à la détermination (112) d'une combinaison de détection de la direction du regard et de détection du geste de sélection ;
l'activation (114), en réponse à la sélection par l'utilisateur de l'objet virtuel affiché dans la scène virtuelle pendant le premier mode d'entrée utilisateur, d'un deuxième mode d'entrée utilisateur différent pour l'objet virtuel sélectionné, dans lequel la réalisation (116) d'une action en relation avec l'objet virtuel sélectionné dans la scène virtuelle est en réponse à la détection de gestes d'action (115) sans dépendre de la détection du regard ; et
**caractérisé par**,
pendant le deuxième mode d'entrée utilisateur, l'activation de la sélection (120) d'un autre objet virtuel affiché dans la scène virtuelle en réponse à une combinaison de détection de la direction du regard et de détection du geste de sélection.

2. Procédé selon la revendication 1, la détection du regard comprenant la détection d'un regard d'un utilisateur vers l'objet virtuel affiché dans la scène virtuelle.

3. Procédé selon la revendication 1 ou 2, la détection de geste de sélection dans le premier mode d'entrée utilisateur comprenant la détection d'un premier geste prédéterminé ; et la détection d'un changement prédéterminé dans le premier geste prédéterminé.

4. Procédé selon la revendication 3, le changement du premier geste prédéterminé étant un changement de main ou de mains d'un premier état à un second état.

5. Procédé selon la revendication 4, comprenant la détection d'un geste d'action, le geste d'action comprenant le maintien de la main ou des mains dans le second état tout en déplaçant la main ou les mains dans l'espace dans le second état.

6. Procédé selon la revendication 4, comprenant l'activation d'un retour au premier mode d'entrée utilisateur, en réponse au changement de la main ou des mains du deuxième état au premier état.

7. Procédé selon la revendication 4, 5 ou 6, le premier état étant l'un des états parmi poing non serré et poing serré, et le second état étant l'autre des états parmi poing non serré et poing serré.

8. Procédé selon n'importe quelle revendication précédente, la réalisation de l'action en relation avec l'objet virtuel sélectionné en réponse à la détection d'un geste d'action sans dépendre de la détection du regard, comprenant la variation de l'objet virtuel sélectionné.

9. Procédé selon n'importe quelle revendication précédente, la réalisation de l'action en relation avec l'objet virtuel sélectionné en réponse à la détection d'un geste d'action sans dépendre de la détection du regard, comprenant la variation du contenu associé à l'objet virtuel sélectionné.

10. Procédé selon n'importe quelle revendication précédente, la réalisation de l'action en relation avec l'objet virtuel sélectionné en réponse à la détection d'un geste d'action sans dépendre de la détection du regard, comprenant un ou plusieurs des éléments parmi :
déplacement d'une fenêtre virtuelle comprenant un contenu en réponse à un geste d'action à deux mains ;
panoramique du contenu à l'intérieur d'une fenêtre virtuelle en réponse à un premier geste d'action à une main ;
redimensionnement du contenu d'une fenêtre virtuelle en réponse à un second geste d'action à une main, différent du premier geste d'action à une main.

11. Procédé selon n'importe quelle revendication précédente, comprenant en outre :
l'activation (121) en réponse à la sélection par l'utilisateur de l'objet virtuel supplémentaire affiché dans la scène virtuelle pendant le deuxième mode d'entrée utilisateur, d'un troisième mode d'entrée utilisateur différent pour l'objet virtuel sélectionné et l'objet virtuel supplémentaire sélectionné, dans lequel la réalisation (123) d'une action commune en relation avec l'objet virtuel sélectionné et l'autre objet virtuel sélectionné dans la scène virtuelle est en réponse à la détection d'un geste d'action (122) sans dépendre de la détection du regard.

12. Procédé selon n'importe quelle revendication précédente, comprenant en outre l'activation (118,125) d'un retour au premier mode d'entrée utilisateur, en réponse à la détection de gestes de désélection (117, 124) sans dépendre de la détection du regard.

13. Appareil (30, 31, 33) comprenant des moyens pour réaliser le procédé selon au moins une des revendications 1 à 12.

14. Appareil selon la revendication 13, configuré en outre comme un appareil monté sur la tête (33) pour la réalité augmentée.

15. Code de programme informatique (48) qui, lorsqu'il est réalisé par au moins un processeur (40), amène au moins le procédé selon au moins l'une des revendications 1 à 12 à être réalisé.
